# DEMANDE DE BREVET EUROPEEN

(11) **EP 3 228 193 A1**
(43) Date de publication de la demande: **11.10.2017**
(21) Numéro de dépôt: 17165412.2
(22) Date de dépôt: 07.04.2017
(51) Int. Cl.: A22C 25/04, A01K 61/90

(54) **DISPOSITIF DE SEPARATION DE POISSONS**

(30) Priorité: 08.04.2016 FR 1653092
(71) Demandeur: Etablissements Faivre, 25110 Baume les Dames (FR)
(72) Inventeur: FAIVRE, Jean-Louis, 25770 Serre les Sapins (FR)
(74) Mandataire: Novagraaf Technologies

(57) **Abrégé**

Un dispositif de séparation de poissons (P) comporte une série de canaux (1) disposés parallèlement les uns aux autres selon une pente et délimités entre eux par des cloisons (5). Des moyens de séparation (2) sont disposés en entrée des canaux (1), en partie supérieure, pour ne laisser passer qu'un poisson à la fois glissant par gravité dans chaque canal (1). Les moyens de séparation (2) comportent une table de répartition (20) et une dent (22) s'étendant sur la table de répartition (20) dans le prolongement de chaque cloison (5), chaque dent (22) comportant deux flancs (220) inclinés convergeant vers une pointe de la dent (22) située au niveau de la table de répartition (20).

## Description

### Domaine technique

La présente invention se rapporte à un dispositif de séparation de poissons, destiné en particulier à la pisciculture.

### Etat de la technique

Dans les différentes phases de la pisciculture, on procède au tri et au comptage des poissons. Le tri est effectué en fonction du calibre des poissons, que ce soit la longueur, la masse ou la section de ceux-ci. Les poissons sont ensuite répartis dans différents bassins afin de poursuivre leur croissance.

Il est nécessaire de bien séparer les poissons avant de réaliser le tri proprement dit. De manière complémentaire, il est utile de quantifier les poissons dans ces opérations, afin d'ajuster le nombre des poissons en fonction de la taille des bassins. L'opération de comptage est également nécessaire lors des livraisons des poissons à d'autres acteurs.

On connait déjà un dispositif de comptage de poissons dans lequel les poissons sont déversés avec un flux d'eau pour faire passer individuellement chaque poisson dans un canal incliné. Chaque poisson est détecté lorsqu'il passe dans le canal de manière à incrémenter un compteur.

Pour ne laisser passer qu'un seul poisson par canal, on dispose en entrée de celui-ci une sorte d'entonnoir dont la section est calibrée pour une taille de poisson. L'entonnoir ne peut laisser passer qu'un seul poisson à la fois. Ce dispositif a montré une bonne efficacité. Toutefois, il nécessite d'avoir à disposition différents jeux d'entonnoirs afin d'adapter le dispositif à la taille des poissons à compter. De plus, si l'opérateur se trompe de taille d'entonnoir, plusieurs poissons peuvent passer simultanément, ou l'entonnoir peut s'engorger.

L'invention vise donc à fournir un dispositif de séparation de poissons qui soit fiable et simple à mettre en oeuvre.

### Description de l'invention

Avec ces objectifs en vue, l'invention a pour objet un dispositif de séparation de poissons comportant une série de canaux disposés parallèlement les uns aux autres selon une pente et des moyens de séparation disposés en entrée des canaux, en partie supérieure, pour ne laisser passer qu'un poisson à la fois glissant par gravité dans chaque canal, les canaux étant délimités entre eux par des cloisons, caractérisé en ce que les moyens de séparation comportent une table de répartition et des dents s'étendant sur la table de répartition dans le prolongement de chaque cloison, chaque dent comportant deux flancs inclinés convergeant vers une pointe de la dent située au niveau de la table de répartition.

Les dents telles que conçues délimitent entre elles une section en trapèze dont la petite base est en bas, délimitée par la table de répartition. La section de ce trapèze diminue vers l'aval, du fait que les dents sont en pointe. On constate que cette caractéristique permet de disposer les poissons les uns à la suite des autres, sans qu'ils se chevauchent. En effet, l'inclinaison des flancs tend à ramener les poissons sur la table. De plus, comme la section entre les dents diminue dans le sens vers les canaux, il ne reste au final de la place que pour un seul poisson. On constate en outre que le dispositif permet de séparer les poissons dans une large gamme de calibre, sans qu'il soit nécessaire d'adapter ou de modifier le dispositif. Ainsi ce dispositif est utilisable en amont d'une opération de tri ou sur un dispositif de comptage.

Selon une caractéristique complémentaire, les canaux ont une section en V, des flancs des canaux étant reliés aux flancs des dents correspondantes. Les canaux sont ainsi dans la continuité des dents et poursuivent le travail de séparation des poissons.

Les flancs des canaux sont par exemple inclinés pour former entre eux un angle compris entre 40 et 90°, de préférence entre 40 et 60°, par exemple 50°. Les meilleurs résultats ont été observés avec ces valeurs, en particulier pour des salmonidés.

Selon une disposition avantageuse, le dispositif comporte une canalisation d'arrivée pour déverser les poissons sur la table de répartition. La canalisation peut être ouverte ou fermée. Elle est typiquement reliée à un réservoir contenant de l'eau et des poissons à compter. Elle peut aussi être reliée à l'une des sorties d'un dispositif de tri.

Selon un perfectionnement, les pointes des dents sont réparties selon une courbe formant une avancée au plus près du débouché de la canalisation. Cette disposition permet de mieux répartir les poissons entre les différents canaux dont les entrées sont placées côte à côte. En effet, les dents les plus éloignées étant plus courtes, elles laissent approcher plus facilement les poissons qui glissent latéralement sur la table de répartition.

Les dents s'étendent par exemple sur une longueur d'au moins l'intervalle entre chaque canal.

Selon une disposition, la table de répartition est sensiblement horizontale. Les poissons se répartissent mieux de cette manière entre les différents canaux.

Les canaux sont inclinés par exemple d'une pente d'au moins 25° par rapport à l'horizontale. L'évacuation des poissons est ainsi assez rapide. De plus, l'accélération des poissons dans leur glissage dans les canaux permet de bien les séparer les uns des autres, garantissant un comptage sans confusion.

De manière complémentaire, le dispositif est un dispositif de comptage et comporte une cellule de comptage pour chaque canal.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue de côté d'un dispositif selon un mode de réalisation de l'invention ;
- la figure 2 est une vue en perspective d'une partie du dispositif de la figure 1 ;
- la figure 3 est une vue en coupe selon la ligne III-III de la figure 1.

### DESCRIPTION DETAILLEE

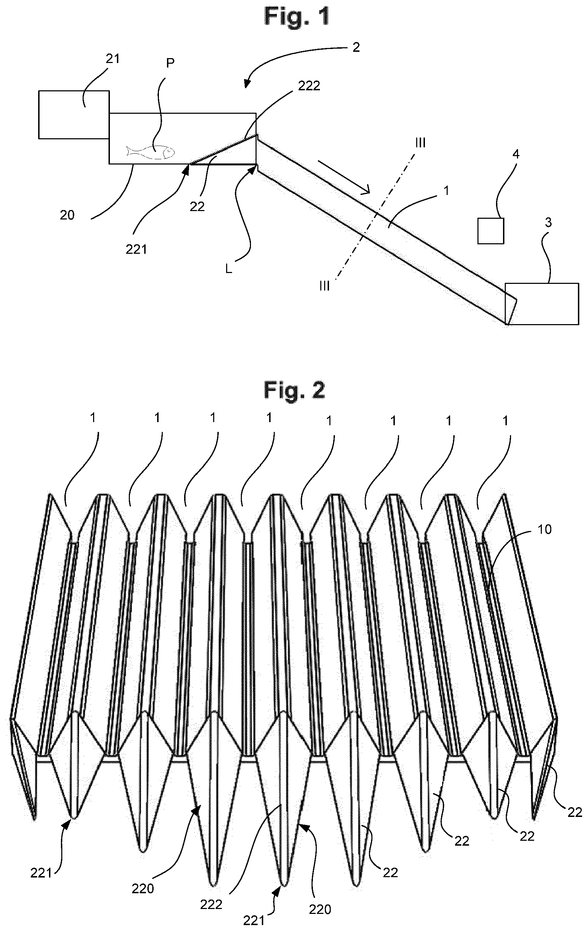

Un dispositif de séparation de poissons P selon un mode de réalisation de l'invention, est montré sur les figures 1 à 3. Il fonctionne par gravité et est donc représenté en position d'utilisation. Les orientations haut et bas ou en pente se réfèrent à cette position d'utilisation. Le dispositif de séparation est utilisé comme dispositif de comptage.

Le dispositif comporte une série de canaux 1 disposés parallèlement les uns aux autres selon une pente et des moyens de séparation 2 disposés en entrée des canaux 1, en partie supérieure. Les moyens de séparation 2 comportent une table de répartition 20 qui reçoit une canalisation d'arrivée 21 pour déverser les poissons P sur la table de répartition 20. La table de répartition 20 est sensiblement horizontale. Un bac de réception 3 est placé en bas de la série de canaux 1. Chaque canal 1 est muni d'une cellule de comptage 4 qui envoie une information de comptage à un totalisateur, non représenté.

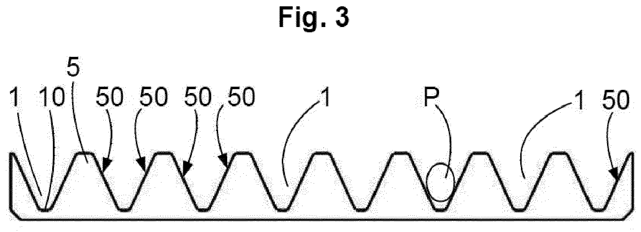

Comme le montre en particulier la figure 3, les canaux 1 sont séparés entre eux par des cloisons 5 dont les flancs 50 sont inclinés. Ainsi, les canaux 1 ont une section en forme de V dont la pointe est en bas. Les flancs 50 des canaux 1 sont inclinés pour former entre eux un angle de l'ordre de 50°. Les canaux 1 sont sensiblement dans un même plan incliné de 25° par rapport à l'horizontale. Les flancs 50 des canaux 1 sont reliés par un petit fond plat 10 au niveau de la pointe des vés. La table de répartition 20 s'étend jusqu'à une ligne de cassure L à partir de laquelle le fond plat 10 des vés des canaux 1 s'étend. La ligne de cassure L est droite dans ce mode de réalisation.

Les moyens de séparation 2 comportent des dents 22 s'étendant sur la table de répartition 20 dans le prolongement de chaque cloison 5 à partir de la ligne de cassure L. Chaque dent 22 comporte deux flancs 220 inclinés convergeant vers une pointe 221 de la dent 22 située au niveau de la table de répartition 20. Les flancs 220 des dents 22 se rejoignent en partie supérieure le long d'une arête 222 inclinée qui monte en s'éloignant de la canalisation d'arrivée 21. Les flancs 50 des canaux 1 sont reliés aux flancs 220 des dents 22 correspondantes. La longueur des dents 22 est variable. Les dents 22 les plus longues sont près du milieu de la table de répartition 20, tandis que les plus courtes sont le long des bords de ladite table. Ainsi, les pointes des dents 22 sont réparties selon une courbe formant une avancée au plus près du débouché de la canalisation d'arrivée 21. Afin que l'angle au niveau de la pointe des dents 22 ne soit pas trop large, et de réaliser une bonne séparation des poissons P, les dents 22 s'étendent sur une longueur d'au moins l'intervalle entre chaque canal 1.

Lors de l'utilisation du dispositif de comptage, la canalisation d'arrivée 21 est connectée à un bassin, non représenté, contenant des poissons P dans de l'eau. On laisse l'eau s'écouler dans la canalisation d'arrivée 21, de telle sorte qu'elle arrive avec les poissons P sur la table de répartition 20. L'eau s'étend sur la table et continue à s'écouler par les canaux 1. Elle entraîne avec elle les poissons P. Lorsque les poissons P arrivent sur la table de répartition 20, les poissons P qui seraient sur d'autres glissent contre les pans inclinés des dents 22, de telle sorte qu'ils se répartissent sur la surface de la table de répartition 20 sans se chevaucher. Dans le mouvement vers les canaux 1, la largeur disponible pour le passage des poissons P est de plus en plus étroite de telle sorte que si deux poissons P se présentent ensemble, l'un remonte sur le flanc de l'une des dents 22 et est retenu vers l'amont pour laisser passer le premier poisson. Ainsi, on constate que les poissons P s'engagent un par un dans les canaux 1. Toutefois, si deux poissons P passaient ensemble au-delà de la ligne de cassure L, la forme en V des canaux 1 continuerait l'action de séparation des poissons P pour ne laisser passer qu'un poisson à la fois glissant par gravité dans chaque canal 1. Chaque poisson passant dans l'un des canaux 1 est repéré par les cellules de comptage 4 de manière à comptabiliser tous les passages. Après leur passage dans les canaux 1, les poissons P sont regroupés dans le bac de réception 3, puis transférés vers un autre bassin.

L'invention n'est pas limitée au mode de réalisation décrit uniquement à titre d'exemple. Les flancs 50, 220 des canaux 1 et des dents 22 ne sont pas nécessairement plans mais peuvent être convexes ou concaves. La ligne de cassure L pourrait être courbe ou brisée.

## Revendications

1. Dispositif de séparation de poissons (P) comportant une série de canaux (1) disposés parallèlement les uns aux autres selon une pente et des moyens de séparation (2) disposés en entrée des canaux (1), en partie supérieure, pour ne laisser passer qu'un poisson à la fois glissant par gravité dans chaque canal (1), les canaux (1) étant délimités entre eux par des cloisons (5), les moyens de séparation (2) comportant une table de répartition (20) et des dents (22) s'étendant sur la table de répartition (20) dans le prolongement de chaque cloison (5), chaque dent (22) comportant deux flancs (220) inclinés convergeant vers une pointe de la dent (22) située au niveau de la table de répartition (20), le dispositif de séparation de poissons (P) comprenant en outre une canalisation d'arrivée (21) pour déverser les poissons (P) sur la table de répartition (20), **caractérisé en ce que** lequel les pointes des dents (22) sont réparties selon une courbe formant une avancée au plus près du débouché de la canalisation.

2. Dispositif selon la revendication 1, dans lequel les canaux (1) ont une section en V, des flancs (50) des canaux (1) étant reliés aux flancs (220) des dents (22) correspondantes.

3. Dispositif selon la revendication 2, dans lequel les flancs (50) des canaux (1) sont inclinés pour former un entre eux angle compris entre 40 et 90°, de préférence entre 40 et 60°.

4. Dispositif selon l'une des revendications 1 à 3, dans lequel les dents (22) les plus longues sont près du milieu de la table de répartition (20) et les dents(22) les plus courtes sont le long des bords de ladite table derépartition (20)

5. Dispositif selon l'une des revendications précédentes, dans lequel les dents (22) s'étendent sur une longueur d'au moins l'intervalle entre chaque canal (1).

6. Dispositif selon l'une des revendications précédentes, dans lequel la table de répartition (20) est sensiblement horizontale.

7. Dispositif selon l'une des revendications précédentes, dans lequel les canaux (1) sont inclinés d'au moins 25° par rapport à l'horizontale.

8. Dispositif selon l'une des revendications précédentes, **caractérisé en ce qu'**il est un dispositif de comptage et comporte une cellule de comptage (4) pour chaque canal (1).
